# EUROPÄISCHE PATENTANMELDUNG

(11) **EP 4 664 748 A1**
(43) Veröffentlichungstag der Anmeldung: **17.12.2025**
(21) Anmeldenummer: 25179256.0
(22) Anmeldetag: 28.05.2025
(51) Int. Cl.: H02S 20/10, F24S 25/617

(54) **VERANKERUNG FÜR PHOTOVOLTAIK-FREIFLÄCHENANLAGEN IM UNTERGRUND**

(30) Priorität: 31.05.2024 DE 102024115266
(71) Anmelder: RWE Power AG, 45141 Essen (DE)
(72) Erfinder: Raabe, Paul, 45141 Essen (DE)
(74) Vertreter: Schwenderling, Jens

(57) **Zusammenfassung**

Vorrichtung (1) zur Verankerung einer Photovoltaik-Anlage in einem Untergrund (3), umfassend ein Profil (4) mit einem Ankerbereich (5), wobei das Profil (4) ein erstes Ende (7) und ein dem ersten Ende (7) gegenüberliegendes zweites Ende (8) aufweist, wobei der Ankerbereich (5) an das erste Ende (7) des Profils (4) angrenzend ausgebildet ist, wobei eine distale Richtung (R) von dem zweiten Ende (8) zum ersten Ende (7) gerichtet ist, wobei das Profil (4) in dem Ankerbereich (5) zwei Schenkel (9) aufweist, wobei die Schenkel (9) jeweils einen an das erste Ende (7) des Profils (4) angrenzenden Führungsfuß (10) aufweisen, wobei die Schenkel (9) derart ausgebildet sind, dass die Führungsfüße (10) der Schenkel (9) durch entgegen der distalen Richtung (R) auf die Führungsfüße (10) einwirkende Kräfte (F) auseinandertreibbar sind.

## Beschreibung

Die Erfindung betrifft eine Vorrichtung zur Verankerung einer Photovoltaik-Freiflächenanlage in einem Untergrund, eine Photovoltaik-Freiflächenanlage und ein Verfahren zur Verankerung einer Photovoltaik-Freiflächenanlage im Untergrund.

Verankerungen von Photovoltaik-Anlagen (abgekürzt: PV-Anlage) in einem Untergrund sind bekannt. Für eine Gründungsvariante von PV-Anlagen werden Stahlprofile in den Untergrund eingerammt. Der Bereich des Stahlprofils im Untergrund bemisst die Einbindetiefe im Untergrund. Die eingebundene Oberfläche des Stahlprofils ist im Kontakt mit dem Boden des Untergrundes einer Oberflächenreibung ausgesetzt, die einer Ausziehkraft entgegenwirkt. Die Oberflächenreibung wird auch Mantelreibung genannt.

Zur sicheren Verankerung der PV-Anlage ist die Mantelreibung des Stahlprofils von besonderer Bedeutung. Die notwendige Mantelreibung wird durch diejenigen Kräfte auf das Stahlprofil bestimmt, die über die PV-Anlage auf das Stahlprofil übertragen werden und nach oben oder unten gerichtet sind. Dies ist insbesondere von Bedeutung, um beispielsweise einen Auftrieb des an dem Stahlprofil angebrachten Photovoltaik-Elements durch Wind, auch Windlast genannt, entgegen wirken zu können.

Um eine ausreichende Mantelreibung des Stahlprofils im Untergrund zu erzeugen, weist das Stahlprofil eine Einbindetiefe in den Untergrund auf. Je höher die Einbindetiefe des Stahlprofils in den Untergrund ist, desto höher ist auch der notwendige Materialverbrauch, um das Stahlprofil zu fertigen.

Aufgabe der vorliegenden Erfindung ist es, ausgehend vom beschriebenen Stand der Technik die Einbindetiefe der Verankerung von Photovoltaik-Anlagen zu reduzieren, den Materialverbrauch zur Fertigung der Profile zu reduzieren und gleichzeitig eine sicherere Verankerung zu ermöglichen.

Diese Aufgaben werden gelöst mit den Merkmalen gemäß den unabhängigen Ansprüchen. Weitere vorteilhafte Ausgestaltungen sind in den abhängigen Ansprüchen angegeben. Die in den Ansprüchen und in der Beschreibung dargestellten Merkmale sind in beliebiger, technologisch sinnvoller Weise miteinander kombinierbar.

Erfindungsgemäß wird eine Vorrichtung zur Verankerung einer Photovoltaik-Freiflächenanlage in einem Untergrund vorgestellt. Die Vorrichtung umfasst ein Profil mit einem Ankerbereich. Das Profil weist ein erstes Ende und ein dem ersten Ende gegenüberliegendes zweites Ende auf. Der Ankerbereich ist an das erste Ende des Profils angrenzend ausgebildet. Eine distale Richtung ist von dem zweiten Ende zum ersten Ende gerichtet. Das Profil weist in dem Ankerbereich zwei Schenkel auf, wobei die Schenkel jeweils einen an das erste Ende des Profils angrenzenden Führungsfuß aufweisen. Die Schenkel sind derart ausgebildet, dass die Führungsfüße der Schenkel durch entgegen der distalen Richtung auf die Führungsfüße einwirkende Kräfte auseinandertreibbar sind.

Die Vorrichtung kann angewendet werden, um Photovoltaik-Freiflächenanlagen sicher im Untergrund zu verankern. "Verankerung im Untergrund" meint, dass ein Ausziehwiderstand der Vorrichtung als die Summe aller Kräfte beschrieben werden kann, die einer nach oben gerichteten Ausziehkraft entgegenwirken. Beispielsweise kann der Ausziehwiderstand einer Windlast entgegenwirken. Für eine sichere Verankerung ist der Ausziehwiderstand größer als eine maximal erwartbare Windlast. Ist der Ausziehwiderstand geringer als die maximal erwartbare Windlast, dann wäre die Vorrichtung nicht sicher im Untergrund verankert und könnte durch die Windlast aus dem Untergrund entfernt werden.

Der Untergrund kann Böden oder Erden bezeichnen. Insbesondere kann der Untergrund den Baugrund der Vorrichtung bezeichnen.

Das Profil ist vorzugsweise länglich ausgebildet. Es kann in dem Fall als ein längliches Profil bezeichnet werden. Das Profil ist dann ein länglicher Körper. Das Profil kann auch als Pfahl, Pflock oder Mikropfahl bezeichnet werden. Das Profil ist vorzugsweise U-förmig, bevorzugt C-förmig und besonders bevorzugt V-förmig. Vorzugsweise ist das Profil aus Stahl gefertigt.

Das Profil weist ein erstes Ende und ein dem ersten Ende gegenüberliegendes zweites Ende auf. Das erste Ende des Profils kann auch als das untere Ende des Profils beschrieben werden und das zweite Ende des Profils kann als das obere Ende des Profils beschrieben werden. Das bezieht sich auf eine Orientierung des Profils bei bestimmungsgemäßer Verwendung. Alternativ kann das erste Ende des Profils auch als untere Seite des Profils und das zweite Ende des Profils kann auch als obere Seite des Profils bezeichnet werden. Auch das bezieht sich auf eine Orientierung des Profils bei bestimmungsgemäßer Verwendung. Das zweite Ende beschreibt dabei das Ende des Profils, das bei einer Verankerung im Untergrund weiter oben liegt.

Das Profil kann mehrere Seitenflächen aufweisen, die zwischen dem ersten Ende des Profils und dem zweiten Ende des Profils liegen. Das Profil kann auch als ein Ramm-Spreizprofil bezeichnet werden.

Der Ankerbereich ist an das erste Ende des Profils angrenzend ausgebildet. Das Profil weist in dem Ankerbereich zwei Schenkel auf, wobei die Schenkel jeweils einen an das erste Ende des Profils angrenzenden Führungsfuß aufweisen. Die Schenkel können auch als Spreizarme bezeichnet werden. Die Führungsfüße der Schenkel können auch als Führungsflächen, als Profilfüße oder als Füße bezeichnet werden.

Der Ankerbereich kann von dem übrigen Bereich des Profils unterschieden werden, da der Ankerbereich zwei Schenkel aufweist. Der Ankerbereich kann insbesondere als der Bereich des Profils beschrieben werden, der im Untergrund angeordnet werden kann.

Vorzugsweise weisen die Schenkel jeweils eine Innenseite auf, wobei die jeweiligen Innenseiten einander gegenüberliegen.

Die Schenkel sind derart ausgebildet, dass die Führungsfüße der Schenkel durch entgegen der distalen Richtung auf die Führungsfüße einwirkende Kräfte auseinandertreibbar sind. Die Schenkel können dazu derart ausgebildet sein, dass entgegen der distalen Richtung auf die Führungsfüße einwirkende Kräfte die Führungsfüße der Schenkel auseinandertreiben, zumindest sobald diese Kräfte einen Grenzwert übersteigen. Dass die Schenkel durch Kräfte auseinandergetrieben werden können, welche entgegen der distalen Richtung ausgerichtet sind, ist keine Selbstverständlichkeit. Grundsätzlich könnte nur eine quer zur distalen Richtung ausgerichtete Kraft dies bewirken. Die hierin beschriebene Eignung kann jedoch durch die Ausgestaltung der Führungsfüße erreicht werden. Vorzugsweise sind die Führungsfüße derart ausgebildet, dass entgegen der distalen Richtung auf die Führungsfüße einwirkende Kräfte in Kräfte quer zur distalen Richtung umgewandelt werden. Das kann erreicht werden, indem die Führungsfüße entsprechend geformte und ausgerichtete Führungsflächen aufweisen.

Alternativ zu der Beschreibung, dass die Schenkel derart ausgebildet sind, dass die Führungsfüße der Schenkel durch entgegen der distalen Richtung auf die Führungsfüße einwirkende Kräfte auseinandertreibbar sind, können die Schenkel auch insoweit beschrieben werden, als dass die Führungsfüße der Schenkel dazu eingerichtet sind, entgegen der distalen Richtung auf die Führungsfüße einwirkende Kräfte in Kräfte quer zur distalen Richtung umzuwandeln.

Alternativ zu der Beschreibung, dass die Schenkel derart ausgebildet sind, dass die Führungsfüße der Schenkel durch entgegen der distalen Richtung auf die Führungsfüße einwirkende Kräfte auseinandertreibbar sind, können die Schenkel auch insoweit beschrieben werden, als dass die Führungsfüße der Schenkel Führungsflächen aufweisen, welche entgegen der distalen Richtung aufeinander zu laufen.

Die Führungsfüße der Schenkel können insbesondere so zueinander geneigt sein, dass ein Abstand zwischen den Führungsfüßen in distaler Richtung des Schenkels zunimmt.

Eine Kraft, die auf die Führungsfüße entgegen der distalen Richtung einwirkt, kann durch die Formgebung der Führungsfüße in eine Kraft umgewandelt werden, die die Führungsfüße der Schenkel voneinander wegtreibt. Die Führungsfüße der Schenkel können derart ausgebildet sein, dass ein Abstand zwischen den Schenkeln in distaler Richtung durch entgegen der distalen Richtung auf die Führungsfüße einwirkende Kräfte zunimmt.

Die Kraft, die auf die Führungsfüße entgegen der distalen Richtung einwirkt, kann insbesondere auftreten, während die Vorrichtung in den Untergrund gerammt wird.

Während das Profil in den Untergrund gerammt wird, können die Führungsfüße eine Kraft, die entgegen der distalen Richtung wirkt, in eine Kraft orthogonal zur distalen Richtung wandeln. Die Schenkel können also jeweils ein distales Ende mit einer Führungsfläche aufweisen, wobei der Abstand zwischen den Führungsflächen in der distalen Richtung zunimmt, wobei die Führungsflächen dazu ausgebildet sind, die jeweiligen Schenkel in dem Untergrund nach außen zu führen. Die Orientierung "nach außen" kann dadurch beschrieben werden, dass die Schenkel voneinander weggespreizt werden.

Die Vorrichtung kann einen ersten Zustand und einen zweiten Zustand haben. In dem ersten Zustand können entgegen der distalen Richtung auf die Führungsfüße einwirkende Kräfte die Führungsfüße der Schenkel noch nicht auseinandertreiben. Die Kraft auf die Schenkel ist im ersten Zustand noch nicht ausreichend, um die Schenkel zu verbiegen, damit die Führungsfüße der Schenkel auseinandergetrieben werden können.

In dem zweiten Zustand kann die Vorrichtung im Untergrund verankert sein, wobei der Ankerbereich des Profils im Untergrund angeordnet ist. In dem zweiten Zustand sind die Führungsfüße der Schenkel auseinandergetrieben. Das kann insbesondere durch entgegen der distalen Richtung auf die Führungsfüße einwirkende Kräfte verursacht worden sein. Vorzugsweise sind die Schenkel derart ausgebildet, dass ein Elastizitätsmodul der Schenkel so ausgelegt ist, dass die Führungsfüße der Schenkel erst in einer vordefinierten Tiefe auseinandertreiben. Hierfür überschreiten die entgegen der distalen Richtung auf die Führungsfüße einwirkende Kräfte eine notwendige Biegekraft, um die Schenkel auseinander zu bewegen.

Insbesondere können die Schenkel derart ausgebildet sein, dass die Führungsfüße der Schenkel durch entgegen der distalen Richtung auf die Führungsfüße einwirkende Kräfte auseinandertreibbar sind, wobei die einwirkenden Kräfte jeweils als eine Biegemomentbelastung auf die Schenkel wirken.

Alternativ zu der Beschreibung, dass die Schenkel derart ausgebildet sind, dass die Führungsfüße der Schenkel durch entgegen der distalen Richtung auf die Führungsfüße einwirkende Kräfte auseinandertreibbar sind, können die Schenkel auch insoweit beschrieben werden, als dass die Schenkel derart ausgebildet sind, dass die Führungsfüße der Schenkel durch entgegen der distalen Richtung auf die Führungsfüße einwirkende Kräfte auseinandertreibbar sind, und die Schenkel gebogen, insbesondere stetig gebogen, sind. Die entgegen der distalen Richtung auf die Führungsfüße einwirkenden Kräfte können als eine jeweilige Biegemomentbelastung auf die Schenkel wirken.

Vorzugsweise ist die vordefinierte Tiefe zumindest von den Eigenschaften des Untergrunds und von der benötigten Einbindetiefe der Vorrichtung abhängig.

Die Biegekraft, die die Führungsflächen der Schenkel auseinandertreiben kann, kann zum einen über die Kräfte der Führungsfüße erreicht werden. Zum anderen kann der Untergrund, der beim Eintreiben des Profils in den Untergrund zwischen die Schenkel gepresst wird, eine zusätzliche Druckkraft auf die Innenseite der Schenkel erzeugen und somit zu einer zusätzlichen Biegekraft beitragen.

Wenn die Vorrichtung in den Untergrund eingelassen und verankert ist, also im zweiten Zustand vorliegt, kann das Profil in dem Untergrund einem Druck ausgesetzt sein. Insbesondere kann der Ankerbereich des Profils diesem Druck ausgesetzt sein. Dieser Druck kann auch als Seitendruck oder Einwirkung aus dem Untergrund bezeichnet werden. Durch den Druck des Untergrunds auf die Oberfläche des Profils kann eine Oberflächenreibung des Profils, auch Mantelreibung genannt, erzeugt werden. Diese Oberflächenreibung des Profils kann einer Ausziehkraft entgegenwirken. Dies ist insbesondere von Bedeutung, um einer Windlast entgegenzuwirken und damit zu verhindern, dass das Profil aus dem Untergrund gezogen wird.

Zusätzlich zu der Oberflächenreibung können die Schenkel als eine Art Anker und/oder Widerhaken im Untergrund wirken. Ein Teil des Untergrunds liegt auf den auseinandergetriebenen Schenkeln und kann einen Erddruck auf die Schenkel begründen. Der Erddruck auf die Schenkel wird dabei zumindest aus dem Gewicht des Untergrunds auf die obere Oberfläche der Schenkel gebildet. Der Erddruck kann auch als vertikaler Erddruck bezeichnet werden. Zusätzlich kann der Untergrund Scherkräfte bewirken. Diese Scherkräfte können auch Kohäsion oder Haftfestigkeit genannt werden. Dies können zusammenhaltende Kräfte in bindigen Böden sein, bei denen also die Oberflächeneigenschaften der Einzelkörner des Bodens die Eigenschaften, die durch ihre Masse verursacht werden, überwiegen können. Die Oberflächenreibung und der Erddruck können zusammen als Ausziehwiderstand des Profils wirken.

Vorzugsweise ist der Einfluss des Erddrucks auf den Ausziehwiderstand höher als die Oberflächenreibung des Profils.

Die Vorrichtung kommt mit einer vergleichsweise geringen Einbindetiefe aus. Das wird erreicht, indem die Ausgestaltung der Vorrichtung einen besonders großen Ausziehwiderstand bewirkt. Hierfür wirkt der Erddruck auf die Schenkel zusätzlich zu der Oberflächenreibung.

Die Vorrichtung ist vorzugsweise dazu geeignet, als Vorrichtung zur Verankerung im Untergrund bei der unten beschriebenen Photovoltaik-Freiflächenanlage verwendet zu werden.

In einer bevorzugten Ausführungsform der Vorrichtung umfasst das Profil ein Verbindungsstück. Das Verbindungsstück ist zwischen den Schenkeln angeordnet, verbindet die beiden Schenkel miteinander und ist dazu ausgelegt, bei Erreichen einer vorbestimmten Sollbruchkraft zwischen den Schenkeln zu reißen.

Anstelle von "reißen" kann es auch brechen, zerreißen oder versagen heißen. Die Sollbruchkraft kann insbesondere eine Zugkraft und/oder eine Scherkraft sein, die auf das Verbindungsstück wirkt.

Das Verbindungsstück ist vorzugsweise im ersten Zustand der Vorrichtung zwischen den Schenkeln angeordnet. Bei Erreichen der Sollbruchkraft ist insbesondere vorgesehen, dass das Verbindungstück in zwei Teile reißt, und/oder das Verbindungsstück in einer Verbindungsstelle des Verbindungsstücks zu an einem der Schenkel abreißt, sodass das Verbindungsstück von einem der Schenkel gelöst ist. Eine Ursache kann insbesondere sein, dass das Material des Verbindungsstücks bei Erreichen der Sollbruchkraft reißt.

Im zweiten Zustand der Vorrichtung ist vorzugsweise die Sollbruchkraft überschritten worden, so dass das Verbindungstück in zwei Teile gerissen ist und/oder das Verbindungsstück in einer Verbindungsstelle des Verbindungsstücks zu an einem der Schenkel abgerissen ist, sodass das Verbindungsstück von einem der Schenkel gelöst ist.

Die Sollbruchkraft zwischen den Schenkeln kann zum einen über die Kräfte der Führungsfüße erreicht werden. Zum anderen kann der Untergrund, der beim Eintreiben des Profils in den Untergrund zwischen die Schenkel gepresst wird, eine zusätzliche Druckkraft auf die Innenseite der Schenkel und/oder auf das Verbindungsstück erzeugen und somit zu einer zusätzlichen Kraft auf das Verbindungsstück beitragen.

Das Verbindungsstück hat den technischen Vorteil, dass die Schenkel zusätzlich über das Verbindungsstück verbunden sind. Wenn das Profil in den Boden gerammt wird, verhindert das Verbindungsstück zunächst, dass die Führungsfüße der Schenkel auseinandergetrieben werden. Erst bei Erreichen der Sollbruchkraft des Verbindungsstücks können die Führungsfüße der Schenkel auseinandertreiben.

Vorzugsweise ist das Verbindungsstück in einer distalen Hälfte der Schenkel angeordnet. Besonders bevorzugt ist das Verbindungsstück in einem distalen Drittel der Schenkel angeordnet.

Das Verbindungsstück hat den weiteren technischen Vorteil, dass die Führungsfüße der Schenkel erst in einer vordefinierten Tiefe im Untergrund auseinandergetrieben werden. Somit kann das Verbindungsstück den Ausziehwiderstand der verankerten Vorrichtung beeinflussen. Das Erreichen der Sollbruchkraft des Verbindungsstücks kann damit korrelieren, dass die Führungsfüße eine vordefinierte Tiefe im Untergrund erreichen, in der vorgesehen ist, dass die Führungsfüße der Schenkel auseinandertreiben.

In einer weiteren bevorzugten Ausführungsform der Vorrichtung nimmt ein Abstand zwischen den Führungsfüßen in distaler Richtung zu, vorzugsweise linear.

Diese Ausführungsform hat den technischen Vorteil, dass die in der distalen Richtung auf die Führungsfüße einwirkenden Kräfte die Führungsfüße der Schenkel besonders zuverlässig auseinandertreiben können.

Alternativ ist bevorzugt, dass ein Abstand zwischen den Führungsfüßen in distaler Richtung nichtlinear zunimmt. Dies hat den technischen Vorteil, dass die in der distalen Richtung auf die Führungsfüße einwirkenden Kräfte die Führungsfüße der Schenkel besonders zuverlässig auseinandertreiben können.

In einer weiteren bevorzugten Ausführungsform der Vorrichtung liegt ein Winkel zwischen Führungsflächen der Führungsfüße zwischen 60° und 120°, besonders bevorzugt zwischen 80° und 100°.

Ein Winkel zwischen projizierten Verlängerungen der Führungsfüße liegt also zwischen 60° und 120°, vorzugsweise zwischen 80° und 100°. Flächennormalen der Führungsfüße schneiden sich also unter einem Schnittwinkel im Bereich von 60° und 120°, insbesondere 80° bis 100°.

Diese Ausführungsform dient dazu, die Umwandlung der entgegen der distalen Richtung auf die Führungsfüße einwirkende Kräfte, die die Führungsfüße der Schenkel auseinandertreiben, zu verbessern. Dies ist insbesondere von Vorteil, um die Vorrichtung für unterschiedliche Beschaffenheiten des Untergrunds zu nutzen.

Die Sollbruchkraft des Verbindungsstücks kann durch Kraftumwandlung an den Führungsfüßen mit geringeren entgegen der distalen Richtung auf die Führungsfüße einwirkenden Kräfte erreicht werden, wenn der Winkel zwischen den Führungsfüßen gering ist. Ebenso kann die Sollbruchkraft des Verbindungsstücks durch Kraftumwandlung an den Führungsfüßen mit höheren entgegen der distalen Richtung auf die Führungsfüße einwirkenden Kräfte erreicht werden, wenn der Winkel zwischen den Führungsfüßen hoch ist.

Entsprechendes kann auch gelten, wenn kein Verbindungsstück vorhanden ist. Die Biegekraft kann durch Kraftumwandlung an den Führungsfüßen mit geringeren entgegen der distalen Richtung auf die Führungsfüße einwirkenden Kräfte erreicht werden, wenn der Winkel zwischen den Führungsfüßen gering ist. Ebenso kann die Biegekraft durch Kraftumwandlung an den Führungsfüßen mit höheren entgegen der distalen Richtung auf die Führungsfüße einwirkenden Kräfte erreicht werden, wenn der Winkel zwischen den Führungsfüßen hoch ist.

Zusätzlich zu dieser beschriebenen Kraft kann der Teil des Untergrunds, welcher während des Einbringens des Profils in den Untergrund zwischen die Schenkel gepresst wird, durch einen Druck gegen die Innenseite der Schenkel zur Sollbruchkraft beitragen.

In einer weiteren bevorzugten Ausführungsform der Vorrichtung sind die Schenkel durch einen Ausschnitt in dem Ankerbereich in der distalen Richtung des Profils ausgebildet.

Die Ausführungsform hat den technischen Vorteil, dass die Schenkel durch den Ausschnitt einfacher gefertigt werden können.

In einer weiteren bevorzugten Ausführungsform der Vorrichtung entspricht ein Querschnitt der Schenkel zumindest teilweise einer Form eines Querschnitts des Profils.

Diese Ausführungsform hat den technischen Vorteil, dass das Profil einfacher gefertigt werden kann.

In einer weiteren bevorzugten Ausführungsform der Vorrichtung sind die Schenkel des Ankerbereichs plastisch verformbar.

Schenkel, die durch Kräfte auf die Führungsfüße der Schenkel verformt sind, behalten in dieser Ausführungsform ihre Verformung bei.

Diese Ausführungsform hat den technischen Vorteil, dass durch die plastische Verformung der Schenkel im Untergrund eine Ankerwirkung der Schenkel im Untergrund ausgebildet wird und somit die Einbindetiefe reduziert werden kann.In einer weiteren bevorzugten Ausführungsform der Vorrichtung weist das Profil im Ankerbereich einen Widerhaken auf. Der Widerhaken ist derart ausgebildet, dass der Widerhaken im Untergrund verankerbar ist. Der Widerhaken kann auch dadurch beschrieben werden, dass der Widerhaken sich im Untergrund verhaken kann. Bevorzugt weist das Profil im Ankerbereich mehrere Widerhaken auf. Die Widerhaken sind derart ausgebildet, dass die Widerhaken im Untergrund verankerbar sind.

Der Widerhaken kann einen spitzen Winkel zum Profil aufweisen. Hierbei kann in Folge des spitzen Winkels zwischen dem Widerhaken und dem Profil eine Öffnung zur zweiten Seite des Profils hin ausgebildet sein. Dies kann auch dadurch beschrieben werden, dass die Öffnung im ersten Zustand nach oben ausgerichtet ist. Der Widerhaken kann auch als Zacken oder zusammen mit dem Profil als pfeilförmig beschrieben werden. Durch die Form des Widerhakens kann das Profil entgegen der distalen Richtung nur mit erhöhtem Widerstand bewegt werden. In distaler Richtung kann der Widerstand durch den Widerhaken geringer sein. Mit dem Begriff verankerbar ist gemeint, dass die Widerhaken im Untergrund sich verhaken können.

Vorzugsweise sind die Widerhaken entlang der distalen Richtung verteilt. Bevorzugt sind die Widerhaken gleichmäßig entlang der distalen Richtung verteilt.

Der Ankerbereich kann zwei Schenkel und einen oder mehrere Widerhaken aufweisen. Der Ankerbereich kann von dem übrigen Bereich des Profils unterschieden werden, da der Ankerbereich zwei Schenkel und mindestens einen Widerhaken aufweist. Der Ankerbereich kann insbesondere als der Bereich des Profils beschrieben werden, der im Untergrund angeordnet werden kann. Widerhaken können an den Schenkeln und/oder im übrigen Ankerbereich angeordnet sein. Vorzugsweise ist der mindestens eine Widerhaken in distaler Richtung im Ankerbereich zwischen der zweiten Seite des Profils und den Schenkeln angeordnet.

Der Widerhaken kann im ersten Zustand widerstandsarm mit einem spitzen Winkel am Profil anliegen. Dadurch kann das Profil mit geringem Widerstand in den Untergrund gerammt werden. Im zweiten Zustand kann die Vorrichtung im Untergrund verankert sein, wobei der Ankerbereich des Profils im Untergrund angeordnet ist. In dem zweiten Zustand kann der Widerhaken vom Profil abgespreizt sein. Der Widerhaken kann im zweiten Zustand auch bereits durch seine Form sich im Untergrund verhaken.

Vorzugsweise weist der Widerhaken ein proximales Ende und ein distales Ende auf, wobei der Widerhaken über das proximale Ende mit dem Profil befestigt ist, wobei der Widerhaken derart ausgebildet ist, dass der Widerhaken durch eine entlang der distalen Richtung auf das distale Ende des Widerhakens einwirkende Kraft vom Ankerbereich abspreizbar ist.

Bevorzugt weist das Profil im Ankerbereich mehrere Widerhaken auf, wobei die Widerhaken jeweils ein proximales Ende und ein distales Ende aufweisen und wobei die Widerhaken über das jeweilige proximale Ende mit dem Profil befestigt sind, wobei die Widerhaken derart ausgebildet sind, dass die Widerhaken durch eine entlang der distalen Richtung auf das jeweilige distale Ende des Widerhakens einwirkende Kraft vom Ankerbereich abspreizbar sind.

Der Widerhaken kann im Untergrund dadurch abgespreizt werden und im Untergrund verhaken, indem das Profil entgegen der distalen Richtung bewegt wird. Hierfür kann das Profil mittels einer Zugkraft bis zu 1 cm, bevorzugt bis zu 10 cm, besonders bevorzugt bis zu 20 cm entgegen der distalen Richtung bewegt werden.

Vorzugsweise ist das proximale Ende des Widerhakens im ersten Zustand näher am zweiten Ende angeordnet als das distale Ende des Widerhakens.

Die Form des Widerhakens und der Abstand der Widerhaken zueinander kann auf die Beschaffenheit des Untergrunds und an die maximal erwartbare Windlast angepasst sein.

Diese Ausführungsform hat den technischen Vorteil, dass der Ausziehwiderstand der verankerten Vorrichtung erhöht werden kann. Hierdurch kann die Einbindetiefe für die Verankerung von Photovoltaik-Anlagen reduziert werden, der Materialverbrauch zur Fertigung der Profile kann reduziert werden und die Sicherheit kann erhöht werden. Die Sicherheit kann auch schon dadurch erhöht werden, dass die Widerhaken erst dann abgespreizt werden, falls der Ausziehwiderstand der Schenkel überschritten werden sollte.

In einer weiteren bevorzugten Ausführungsform bildet das Profil den Widerhaken aus. In das Profil können Öffnungen gestanzt oder geschnitten werden, so dass Zungen ausgebildet werden. Eine jeweilige Zunge kann den Widerhaken ausbilden.

Der Widerhaken klappt bei einer Zugbelastung des Profils im Untergrund aus und verhakt sich im Untergrund. Der Vorgang des Ausklappens kann auch als Abspreizen oder Ausfahren bezeichnet werden. Hierdurch kann der Widerstand gegen eine Zugbelastung am Profil erhöht werden.

Diese Ausführungsform hat den technischen Vorteil, dass die Widerhaken besonders einfach und schnell hergestellt werden können.

Als ein weiterer Aspekt der Erfindung wird eine Photovoltaik-Freiflächenanlage vorgestellt. Die Photovoltaik-Freiflächenanlage umfasst ein Photovoltaik-Element und eine Vorrichtung. Die Vorrichtung geht vorzugsweise aus der obigen Vorrichtung hervor.

Die Vorrichtung weist ein Profil mit einem Ankerbereich auf, wobei das Profil ein erstes Ende und ein dem ersten Ende gegenüberliegendes zweites Ende aufweist. Der Ankerbereich ist an das erste Ende des Profils angrenzend ausgebildet. Eine distale Richtung ist von dem zweiten Ende zum ersten Ende gerichtet. Das Profil weist in dem Ankerbereich zwei Schenkel auf, wobei die Schenkel jeweils einen an das erste Ende des Profils angrenzenden Führungsfuß aufweisen. Ein Abstand zwischen den Schenkeln nimmt in der distalen Richtung zu. Die Vorrichtung ist in einem Untergrund verankert und das Photovoltaik-Element ist an der Vorrichtung befestigt.

Die beschriebenen Vorteile und Merkmale der obigen Vorrichtung sind auf die Photovoltaik-Freiflächenanlage anwendbar und übertragbar, und umgekehrt. Die Vorrichtung der Photovoltaik-Freiflächenanlage entspricht vorzugsweise der obigen Vorrichtung in dem zweiten Zustand. In der Vorrichtung der Photovoltaik-Freiflächenanlage, die im Untergrund verankert ist, sind die Schenkel der Vorrichtung der Photovoltaik-Freiflächenanlage vorzugsweise nicht mehr über ein Verbindungsstück miteinander verbunden.

Das Photovoltaik-Element kann ein Solar-Element sein. Vorzugsweise wandelt das Photovoltaik-Element Lichtenergie der Sonne in elektrische Energie um.

In einer bevorzugten Ausführungsform der Photovoltaik-Freiflächenanlage weist das Profil im Ankerbereich einen Widerhaken auf, wobei der Widerhaken derart ausgebildet ist, dass der Widerhaken sich im Untergrund verhakt.

Diese Ausführungsform hat den technischen Vorteil, dass die Sicherheit der Photovoltaik-Freiflächenanlage erhöht werden kann.

Als ein weiterer Aspekt der Erfindung wird ein Verfahren zur Verankerung von der Photovoltaik-Freiflächenanlage im Untergrund umfassend die beschriebene Vorrichtung vorgestellt.

Das Verfahren umfasst die Schritte:
a) Rammen der Vorrichtung in den Untergrund, wobei die Vorrichtung einen ersten Zustand aufweist, in welchem die entgegen der distalen Richtung auf die Führungsfüße einwirkende Kräfte die Führungsfüße der Schenkel noch nicht auseinandertreiben,
b) weiteres Rammen der Vorrichtung in den Untergrund bis die Vorrichtung einen zweiten Zustand einnimmt und die Schenkel nach außen weggespreizt sind.

Die beschriebenen Vorteile und Merkmale der Photovoltaik-Freiflächenanlage und die beschriebenen Vorteile und Merkmale der Vorrichtung sind auf das Verfahren anwendbar und übertragbar, und umgekehrt. Die Photovoltaik-Freiflächenanlage ist vorzugsweise zur Verankerung gemäß dem beschriebenen Verfahren eingerichtet. Das Verfahren wird vorzugsweise mit der Vorrichtung durchgeführt. Ergebnis des Verfahrens ist vorzugsweise die beschriebene Photovoltaik-Freiflächenanlage.

Die Vorrichtung wird vorzugsweise mit einer Ramme in den Untergrund gerammt.

In einer bevorzugten Ausführungsform des Verfahrens umfasst das Profil ein Verbindungsstück, wobei das Verbindungsstück zwischen den Schenkeln angeordnet ist, die Schenkel miteinander verbindet und dazu ausgelegt ist, bei Erreichen einer vorbestimmten Sollbruchkraft zwischen den Schenkeln zu reißen, wobei in Schritt a) die Zugkraft zwischen den Schenkeln auf das Verbindungsstück kleiner ist als die Sollbruchkraft des Verbindungsstücks, und wobei die Sollbruchkraft des Verbindungsstücks zwischen den Schenkeln zwischen den Schritten a) und b) überschritten wird.

Nachdem die Sollbruchkraft erreicht ist und das Verbindungsstück gerissen ist, können die Schenkel, während die Vorrichtung weiter in den Untergrund gerammt wird, nach außen weggespreizt werden, bis der zweite Zustand der Vorrichtung erreicht ist.

Vorzugsweise umfasst das Verfahren weiterhin den folgenden Schritt:
c) Befestigen des Photovoltaik-Elementes an dem zweiten Ende des Profils.

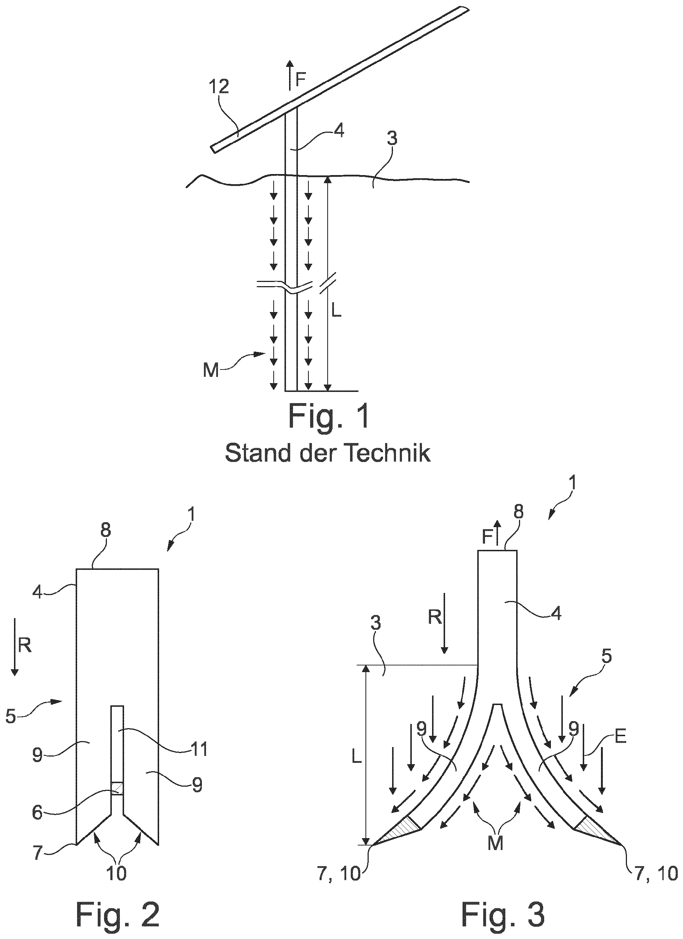

Der Stand der Technik wird nachfolgend anhand der Figur 1 näher erläutert. Die Erfindung wird nachfolgend anhand der Figuren 2 bis 4 näher erläutert. Die Figuren zeigen ein besonders bevorzugtes Ausführungsbeispiel, auf das die Erfindung jedoch nicht begrenzt ist. Die Figuren und die darin dargestellten Größenverhältnisse sind nur schematisch. Es zeigen:
- Fig. 1:: eine schematische Ansicht eines aus dem Stand der Technik bekannten Stahlprofils zur Verankerung von PV-Anlagen, und
- Fig. 2:: eine schematische Ansicht einer erfindungsgemäßen Vorrichtung, und
- Fig. 3:: eine schematische Ansicht der erfindungsgemäßen Vorrichtung aus Fig. 2 in einem im Untergrund verankerten Zustand, und
- Fig. 4:: eine schematische Ansicht einer erfindungsgemäßen Photovoltaik-Freiflächenanlage mit der Vorrichtung aus Fig. 3, und
- Fig. 5a: einen schematischen Ausschnitt einer erfindungsgemäßen zweiten Ausführungsform der Vorrichtung, und
- Fig. 5b: eine Seitenansicht des Ausschnitts aus Fig. 5a.

Fig. 1 zeigt eine schematische Ansicht eines aus dem Stand der Technik bekannten Profils 4 zur Verankerung einer Photovoltaik-Anlage mit einem Photovoltaik-Element 12 in einem Untergrund 3. Der Ausziehwiderstand wird über die Oberflächenreibung der Stahlprofiloberfläche M mit dem Untergrund 3 gewährleistet. Um den nötigen Ausziehwiderstand mit der Oberflächenreibung M zu erzeugen, muss eine bestimmte Einbindetiefe L gewährleistet sein. Der Ausziehwiderstand kann einer Windlast F widerstehen.

Fig. 2 zeigt eine schematische Ansicht einer erfindungsgemäßen Vorrichtung 1 zur Verankerung einer Photovoltaik-Freiflächenanlage in einem Untergrund. Die Vorrichtung 1 umfasst ein längliches Profil 4 mit einem Ankerbereich 5 und ein Verbindungsstück 6. Das Profil 4 weist ein erstes Ende 7 und ein dem ersten Ende 7 gegenüberliegendes zweites Ende 8 auf. Der Ankerbereich 5 ist an das erste Ende 7 des Profils 4 angrenzend ausgebildet. Eine distale Richtung R ist von dem zweiten Ende 8 zum ersten Ende 7 gerichtet. Das Profil 4 weist in dem Ankerbereich 5 zwei Schenkel 9 auf, wobei die Schenkel 9 jeweils einen an das erste Ende 7 des Profils 4 angrenzenden Führungsfuß 10 aufweisen.

Die Schenkel 9 sind derart ausgebildet, dass die Führungsfüße 10 der Schenkel 9 durch entgegen der distalen Richtung R auf die Führungsfüße 10 einwirkende Kräfte auseinandertreibbar sind. Das Verbindungsstück 6 ist zwischen den Schenkeln 9 angeordnet und verbindet die beiden Schenkel 9 miteinander und ist dazu ausgelegt, bei Erreichen einer vorbestimmten Sollbruchkraft zwischen den Schenkeln 9 zu reißen.

Ein Abstand zwischen den Führungsfüßen 10 nimmt in distaler Richtung R linear zu. Ein Winkel zwischen Führungsflächen der Führungsfüße 10 beträgt 90°. Die Schenkel 9 sind durch einen Ausschnitt 11 in dem Ankerbereich 5 in der distalen Richtung R des Profils 4 ausgebildet.

Der Querschnitt der Schenkel 9 entspricht zumindest teilweise einer Form des Querschnitts des Profils 4. Die Schenkel 9 des Ankerbereichs 5 sind plastisch verformbar.

Fig. 3 zeigt eine schematische Ansicht der erfindungsgemäßen Vorrichtung 1 aus Fig. 2 in einem im Untergrund 3 verankerten Zustand. Die Führungsfüße 10 der Schenkel 9 sind durch die entgegen der distalen Richtung R auf die Führungsfüße 10 einwirkende Kräfte auseinandergetrieben. Die Schenkel 9 des Ankerbereichs 5 sind plastisch verformt.

Das Profil 4 ist in dem Untergrund 3 einem Druck ausgesetzt. Insbesondere ist der Ankerbereich 5 des Profils 4 diesem Druck ausgesetzt. Durch den Druck des Untergrunds 3 auf die Oberfläche des Profils 4 wird eine Oberflächenreibung M des Profils 4, auch Mantelreibung genannt, erzeugt. Diese Oberflächenreibung M des Profils 4 ist einer Ausziehkraft F entgegengesetzt. Dies ist insbesondere dann von Bedeutung, um einer Windlast entgegenzuwirken und damit zu verhindern, dass das Profil 4 aus dem Untergrund gezogen wird.

Zusätzlich zu der Oberflächenreibung M können die Schenkel 9 als eine Art Anker im Untergrund 3 wirken. Ein Teil des Untergrunds 3 liegt auf dem auseinandergetriebenen Schenkel 9 und begründet einen Erddruck E auf die Schenkel 9. Der Erddruck E auf die Schenkel 9 wird dabei zumindest aus dem Gewicht des Untergrunds auf die obere Oberfläche der Schenkel gebildet. Die Oberflächenreibung M und der Erddruck E wirken zusammen als Ausziehwiderstand des Profils 4.

Die Vorrichtung 1 hat den technischen Vorteil, dass auch bei einer geringeren Einbindetiefe L als gemäß dem Stand der Technik ein ausreichend großer Ausziehwiderstand erzielt und somit eine sicherere Verankerung im Untergrund 3 ermöglicht wird.

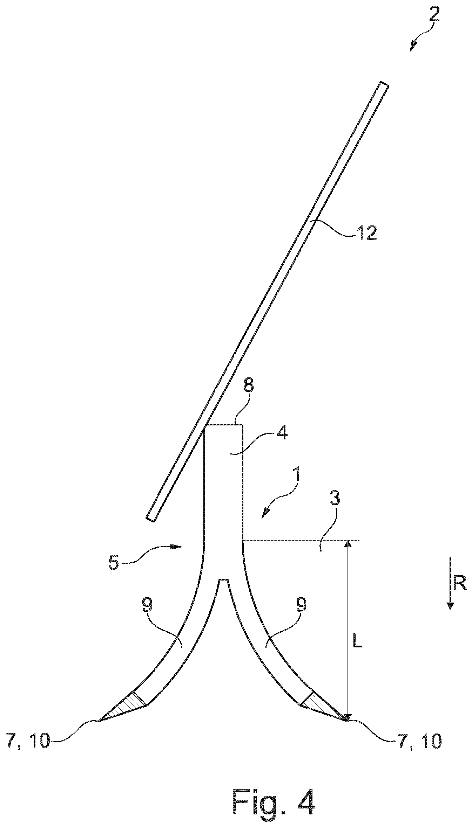

Fig. 4 zeigt eine schematische Ansicht einer erfindungsgemäßen Photovoltaik-Freiflächenanlage 2. Die Photovoltaik-Freiflächenanlage 2 umfasst ein Photovoltaik-Element 12 und die erfindungsgemäße Vorrichtung 1 aus Fig. 3. Die Vorrichtung 1 weist ein längliches Profil 4 mit einem Ankerbereich 5 auf, wobei das Profil 4 ein erstes Ende 7 und ein dem ersten Ende 7 gegenüberliegendes zweites Ende 8 aufweist. Der Ankerbereich 5 ist an das erste Ende 7 des Profils 4 angrenzend ausgebildet. Eine distale Richtung R ist von dem zweiten Ende 8 zum ersten Ende 7 gerichtet. Das Profil 4 weist in dem Ankerbereich 5 zwei Schenkel 9 auf, wobei die Schenkel 9 jeweils einen an das erste Ende 7 des Profils 4 angrenzenden Führungsfuß 10 aufweisen. Ein Abstand zwischen den Schenkeln 9 nimmt in distaler Richtung R zu. Die Vorrichtung 1 ist in einem Untergrund 3 verankert. Das Photovoltaik-Element 12 ist an der Vorrichtung 1 befestigt.

Die Photovoltaik-Freiflächenanlage 2 wurde mit Hilfe der folgenden Schritte im Untergrund 3 verankert:
a) Rammen der Vorrichtung 1 in den Untergrund 3, wobei die Vorrichtung 1 einen ersten Zustand aufweist, in welchem entgegen der distalen Richtung R auf die Führungsfüße 10 einwirkende Kräfte die Führungsfüße 10 der Schenkel 9 noch nicht auseinandertreiben, weil die Zugkraft zwischen den Schenkeln 9 auf das Verbindungsstück 6 kleiner ist als die Sollbruchkraft des Verbindungsstücks 6,
b) weiteres Rammen der Vorrichtung 1 in den Untergrund 3, bis die Vorrichtung 1 einen zweiten Zustand einnimmt und die Schenkel 9 nach außen weggespreizt sind,
c) Befestigen des Photovoltaik-Elementes 12 an dem zweiten Ende 8 des Profils 4.

Die Photovoltaik-Freiflächenanlage 2 weist eine Einbindetiefe L in den Untergrund 3 auf.

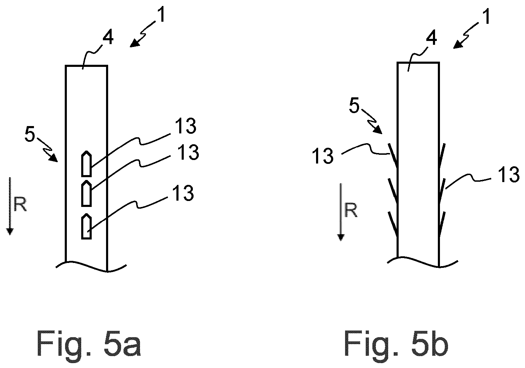

Fig. 5a zeigt einen schematischen Ausschnitt einer erfindungsgemäßen zweiten Ausführungsform der Vorrichtung. Der Ausschnitt zeigt den Ankerbereich 5 des Profils 4, wobei die Schenkel 9 nicht dargestellt sind. Das Profil 4 weist im Ankerbereich 5 mehrere Widerhaken 13 auf. Die Widerhaken 13 sind derart ausgebildet, dass die Widerhaken 13 im Untergrund 3 verankerbar sind. Das Profil 4 bildet die Widerhaken 13 aus. In das Profil 4 können Öffnungen gestanzt oder geschnitten werden, so dass Zungen ausgebildet werden. Eine jeweilige Zunge kann den Widerhaken 13 ausbilden.

Die Widerhaken 13 weisen jeweils ein proximales Ende und ein distales Ende auf. Die Widerhaken 13 sind über das jeweilige proximale Ende mit dem Profil 4 befestigt, wobei die Widerhaken 13 derart ausgebildet sind, dass die Widerhaken 13 durch eine entlang der distalen Richtung R auf das jeweilige distale Ende des Widerhakens 13 einwirkende Kraft vom Ankerbereich abspreizbar sind. Fig. 5b zeigt eine Seitenansicht des Ausschnitts aus Fig. 5a. Die Widerhaken 13 sind beidseitig an dem Profil 4 im Ankerbereich 5 angeordnet.

### Bezugszeichenliste

- 1: Vorrichtung
- 2: Photovoltaik-Freiflächenanlage
- 3: Untergrund
- 4: Profil
- 5: Ankerbereich
- 6: Verbindungsstück
- 7: erstes Ende des Profils
- 8: zweites Ende des Profils
- 9: Schenkel
- 10: Führungsfuß
- 11: Ausschnitt
- 12: Photovoltaik-Element
- 13: Widerhaken
- E: Erddruck
- F: Kraft
- L: Einbindetiefe
- M: Oberflächenreibung
- R: distale Richtung

## Patentansprüche

1. Vorrichtung (1) zur Verankerung einer Photovoltaik-Freiflächenanlage (2) in einem Untergrund (3), umfassend ein Profil (4) mit einem Ankerbereich (5), wobei das Profil (4) ein erstes Ende (7) und ein dem ersten Ende (7) gegenüberliegendes zweites Ende (8) aufweist, wobei der Ankerbereich (5) an das erste Ende (7) des Profils (4) angrenzend ausgebildet ist, wobei eine distale Richtung (R) von dem zweiten Ende (8) zum ersten Ende (7) gerichtet ist, wobei das Profil (4) in dem Ankerbereich (5) zwei Schenkel (9) aufweist, wobei die Schenkel (9) jeweils einen an das erste Ende (7) des Profils (4) angrenzenden Führungsfuß (10) aufweisen, wobei die Schenkel (9) derart ausgebildet sind, dass die Führungsfüße (10) der Schenkel (9) durch entgegen der distalen Richtung (R) auf die Führungsfüße (10) einwirkende Kräfte (F) auseinandertreibbar sind.

2. Vorrichtung (1) nach Anspruch 1, wobei das Profil (4) ein Verbindungsstück (6) umfasst, und wobei das Verbindungsstück (6) zwischen den Schenkeln (9) angeordnet ist, die beiden Schenkel (9) miteinander verbindet und dazu ausgelegt ist, bei Erreichen einer vorbestimmten Sollbruchkraft zwischen den Schenkeln (9) zu reißen.

3. Vorrichtung (1) nach einem der vorherigen Ansprüche, wobei ein Abstand zwischen den Führungsfüßen (10) in der distalen Richtung (R) zunimmt.

4. Vorrichtung (1) nach Anspruch 3, wobei ein Winkel zwischen Führungsflächen der Führungsfüße (10) zwischen 60° und 120° liegt.

5. Vorrichtung (1) nach einem der vorherigen Ansprüche, wobei die Schenkel (9) durch einen Ausschnitt (11) in dem Ankerbereich (5) in der distalen Richtung (R) des Profils (4) ausgebildet sind.

6. Vorrichtung (1) nach einem der vorherigen Ansprüche, wobei ein Querschnitt der Schenkel (9) zumindest teilweise einer Form eines Querschnitts des Profils (4) entspricht.

7. Vorrichtung (1) nach einem der vorherigen Ansprüche, wobei die Schenkel (9) des Ankerbereichs (5) plastisch verformbar sind.

8. Vorrichtung (1) nach einem der vorherigen Ansprüche, wobei das Profil (4) im Ankerbereich (5) einen Widerhaken (13) aufweist, wobei der Widerhaken (13) derart ausgebildet ist, dass der Widerhaken (13) im Untergrund (3) verankerbar ist.

9. Vorrichtung (1) nach Anspruch 8, wobei das Profil (4) den Widerhaken (13) ausbildet.

10. Photovoltaik-Freiflächenanlage (2) umfassend ein Photovoltaik-Element (12) und eine Vorrichtung (1), wobei die Vorrichtung (1) ein Profil (4) mit einem Ankerbereich (5) aufweist, wobei das Profil (4) ein erstes Ende (7) und ein dem ersten Ende (7) gegenüberliegendes zweites Ende (8) aufweist, wobei der Ankerbereich (5) an das erste Ende (7) des Profils (4) angrenzend ausgebildet ist, wobei eine distale Richtung (R) von dem zweiten Ende (8) zum ersten Ende (7) gerichtet ist, wobei das Profil (4) in dem Ankerbereich (5) zwei Schenkel (9) aufweist, wobei die Schenkel (9) jeweils einen an das erste Ende (7) des Profils (4) angrenzenden Führungsfuß (10) aufweisen, wobei ein Abstand zwischen den Schenkeln (9) in der distalen Richtung (R) zunimmt, wobei die Vorrichtung (1) in einem Untergrund (3) verankert ist und wobei das Photovoltaik-Element (12) an der Vorrichtung (1) befestigt ist.

11. Photovoltaik-Freiflächenanlage (2) nach Anspruch 10, wobei das Profil (4) im Ankerbereich (5) einen Widerhaken (13) aufweist, wobei der Widerhaken (13) derart ausgebildet ist, dass der Widerhaken (13) sich im Untergrund (3) verhakt.

12. Verfahren zur Verankerung von einer Photovoltaik-Freiflächenanlage (2) mit einer Vorrichtung (1) nach einem der Ansprüche 1 bis 9, umfassend die Schritte:
a) Rammen der Vorrichtung (1) in den Untergrund (3), wobei die Vorrichtung einen ersten Zustand aufweist, in welchem entgegen der distalen Richtung (R) auf die Führungsfüße (10) einwirkende Kräfte die Führungsfüße (10) der Schenkel (9) noch nicht auseinandertreiben,
b) weiteres Rammen der Vorrichtung (1) in den Untergrund (3), bis die Vorrichtung (1) einen zweiten Zustand einnimmt und die Schenkel (9) nach außen weggespreizt sind.

13. Verfahren nach Anspruch 12, wobei das Profil (4) ein Verbindungsstück (6) umfasst, wobei das Verbindungsstück (6) zwischen den Schenkeln (9) angeordnet ist, die Schenkel (9) miteinander verbindet und dazu ausgelegt ist, bei Erreichen einer vorbestimmten Sollbruchkraft zwischen den Schenkeln (9) zu reißen, wobei in Schritt a) die Zugkraft zwischen den Schenkeln (9) auf das Verbindungsstück (6) kleiner ist als die Sollbruchkraft des Verbindungsstücks (6), und wobei die Sollbruchkraft des Verbindungsstücks (6) zwischen den Schenkeln (9) zwischen den Schritten a) und b) überschritten wird.
